# EUROPÄISCHE PATENTSCHRIFT

(11) **EP 1 083 707 B1**
(45) Veröffentlichungstag und Bekanntmachung des Hinweises auf die Patenterteilung: **19.04.2006**
(21) Anmeldenummer: 00119140.2
(22) Anmeldetag: 04.09.2000
(51) Int. Cl.: H04L 12/56, H04Q 11/04

(54) **Verfahren zur Datenkommunikation**
Data communication method
Procédé de communication de données

(30) Priorität: 09.09.1999 DE 19943115
(43) Veröffentlichungstag der Anmeldung: 14.03.2001
(73) Patentinhaber: SIEMENS AKTIENGESELLSCHAFT, 80333 München (DE)
(72) Erfinder: Hiestand, Thomas, 85293 Reichertshausen (DE)

(56) Entgegenhaltungen:
- WO-A-99/01009

## Beschreibung

Die Erfindung betrifft ein Verfahren zur Datenkommunikation zwischen einer Master-Steuereinheit und einer Slave-Steuereinheit, die über mehrere Anschlußleitungen mit der Master-Steuereinheit verbunden ist.

In bestehenden und zukünftigen digitalen Kommunikationseinrichtungen werden mit Hilfe von auf Kommunikations-Baugruppen angeordneten, im Master-Modus betriebenen Master-Steuereinheiten und im Slave-Modus betriebenen Slave-Steuereinheiten Verbindungen aufgebaut, aufrechterhalten und beendet. Derartige Master- bzw. Slave-Steuereinheiten können beispielsweise als Kommunikationscontroller, FPGA's (Field Programmable Gate Array) oder ASIC's (Application Specific Integrated Circuit) realisiert sein. Hierbei wird die Datenkommunikation zwischen beispielsweise der Master-Steuereinheit und einer von mehreren Slave-Steuereinheiten anhand eines Bussystems realisiert.

Bislang werden hierzu Bussysteme, wie der von Intel entwikkelte PCI-Bus (Peripheral Component Interconnect) oder der VME-Bus (Versa Module Europa) sowie andere proprietäre Bussysteme eingesetzt. Der ansprechbare Adressraum derartiger Bussysteme, insbesondere des PCI-Büsses, ist unter anderem abhängig von der Anzahl der physikalisch auf einer Kommunikations-Baugruppe realisierbaren Adressleitungen, wodurch der ansprechbare Adressraum eines Busteilnehmers, insbesondere einer Slave-Steuereinheit, limitiert ist. Zusätzlich ist kein Fullduplex-Betrieb des Systembusses möglich.

Desweiteren sind nach dem Zeitschlitz-Übertragungsverfahren (Time Division Multiplexing) arbeitende Bussysteme bekannt, bei denen jedem Übertragungskanal eine festgelegte Datenrate zugeordnet ist. Hierdurch ist die Übertragungsbandbreitenzuordnung pro Übertragungskanal starr festgelegt und kann somit nicht flexibel an die zeitlich wechselnden Bandbreitenanforderungen unterschiedlicher Übertragungskanäle angepaßt werden, d.h. die in Spitzenlastsituationen geforderten Übertragungsbandbreiten pro Übertragungskanal müssen vorgehalten werden. Dies kann zu einer kostenintensiven Überdimensionierung der Kommunikationseinrichtungen führen.

Bei nach dem Asynchronen Transfer Modus (ATM) wirkenden Kommunikationssystemen bzw. -einrichtungen ist als übertragungstechnische Schnittstelle zwischen der physikalischen Schicht und der übergeordneten ATM-Schicht durch das ATM Forum eine einheitliche, taktgesteuerte Schnittstelle definiert. Diese Schnittstelle ist in der Fachwelt unter dem Namen "Universal Test and Operation PHY-Interface for ATM", kurz "UTOPIA" oder UTOPIA-Transportprotokoll bekannt - siehe hierzu insbesondere ATM Forum, Level 2, v1.0, Juni 1995. Innerhalb eines ATM-Kommunikationssystems wird das ATM-Schichtenmodell zur funktionalen Unterteilung der Kommunikationsaufgaben benutzt. Es besteht ähnlich wie das OSI-Referenzmodell (Open-Systems Interconnection Reference Model) aus mehreren voneinander unabhängigen Kommunikationsschichten. Hierzu zählen die physikalische Schicht, die ATM-Schicht, die ATM-Anpassungsschicht (AAL) und die in der OSI-Terminologie als "höhere Schichten" bezeichneten anwendungsorientierten Schichten. Aufgabe einer Schicht ist es, Dienstleistungen für die nächsthöhere Schicht bereitzustellen. Insbesondere stellt die physikalische Schicht die Übertragungstechnische Schnittstelle UTOPIA zur Übertragung von Zellen an die übergeordnete ATM-Schicht zur Verfügung.

Die PCT-Anmeldung WO 99101009, Seppaenen, Juha & Tuomisto, Janne et al., (Dokument D1) offenbart ein Verfahren zum Verarbeiten von Signalisierungsnachrichten in einem ATM-Knoten. Dabei wird ein ATM-Umschalter dazu verwendet. Signalisierungszellen zur Eingangsseite zurück zu schicken. Ferner umfasst das Verfahren eine Vorrichtung, die Signalisierungszellen verarbeitet und Funktionen zum Aufteilen und Wiederzusammenführen von Zellströmen beinhaltet.

Die der Erfindung zugrundeliegende Aufgabe besteht darin, die Datenkommunikation zwischen einer Master-Steuereinheit und mindestens einer Slave-Steuereinheit zu verbessern. Die Aufgabe wird ausgehend von einem Verfahren gemäß den Merkmalen des Oberbegriffs des Patentanspruches 1 durch die Merkmale des kennzeichnenden Teils gelöst.

Der wesentliche Aspekt des erfindungsgemäßen Verfahrens ist darin zu sehen, daß die Datenkommunikation zwischen der Master-Steuereinheit und mindestens einer der Slave-Steuereinheiten mit Hilfe des standardisierten UTOPIA-Transportprotokolls durchgeführt wird. Vorteilhaft ist bei der Datenkommunikation mit Hilfe des standardisierten UTOPIA-Transportprotokolls der ansprechbare Adressraum eines Busteilnehmers unabhängig von den physikalischen Adressleitungen, da die Adressierung mit Hilfe des ATM-Zellheaders durchgeführt wird. In dem ATM-Zellheader wird der Verbindungstyp bzw. der ATM-Zellentyp definiert, wodurch der ansprechbare Adressraum bei verringerter Anzahl von physikalischen Adressleitungen beibehalten oder sogar vergrößert werden kann. Desweiteren ist unter Verwendung des erfindungsgemäßen Verfahrens eine Fullduplex-Datenkommunikation zwischen der Master-Steuereinheit und den weiteren Slave-Steuereinheiten möglich. Die zur Realisierung des UTOPIA-Transportprotokolls vorzusehende Schaltungstechnik ist kostengünstig und resourcenschonend physikalisch implementierbar. Zusätzlich wird durch die Verwendung des UTOPIA-Transportprotokolls eine erhebliche Verbesserung der Skalierbarkeit des Kommunikationssystems beispielsweise hinsichtlich der Zahl der Kommunikations-Teilnehmer oder der Übertragungsbandbreite erreicht, d.h. die Überdimensionierung von Kommunikationseinrichtungen zum "Auffangen" von Spitzenlastsituationen entfällt. Desweiteren ist durch das erfindungsgemäße Verfahren das Vorsehen eines Sicherungsprotokolls auf einfache Art und Weise realisierbar.

Des weiteren kann mit Hilfe des erfindungsgemäßen Verfahrens die Anzahl der verschiedenen Bussysteme reduziert werden, da das UTOPIA-Transportprotokoll nahezu für sämtliche Datenkommunikationsaufgaben zwischen Master-Steuereinheiten und Slave-Steuereinheiten verwendet werden kann, d.h. unterschiedlichste Informationsarten - beispielsweise auch IP-Pakete (Internet Protocol) - können in ATM-Zellen verpackt und mit Hilfe des UTOPIA-Transportprotokolls übertragen werden. Dadurch kann die Anzahl der verschiedenen Schnittstellen auf den Kommunikations-Baugruppen verringert werden, welches einen geringeren Entwicklungs-, Design- und Wartungsaufwand bewirkt. Speziell für die Wartung der Kommunikations-Baugruppen können kostengünstige, für das UTOPIA-Transportprotokoll ausgelegte Standard-Meßgeräte eingesetzt werden.

Nach einer weiteren Ausgestaltung des erfindungsmäßen Verfahrens werden jeweils in der Master-Steuereinheit und in der Slave-Steuereinheit mit Hilfe einer Anpassungseinrichtung die zu übertragenden Daten an das ATM-Zellenformat angepaßt. Vorteilhaft werden mit Hilfe der Anpassungseinrichtung die an die Schnittstelle gesteuerten Daten an das ATM-Zellenformat angepaßt, d.h. die Daten werden in ATM-Zellen verpackt und beispielsweise Routing-Informationen in den Zellheader eingefügt. Somit werden die zu übertragenden Daten an das im ATM Forum UTOPIA Level 2 - Standard, Version 1., June 1995 geforderte ATM-Zellenformat angepaßt. Zusätzlich können aufgrund der bereits im ATM-Zellenformat vorliegenden Daten ohne erheblichen schaltungstechnischen Aufwand bzw. erhebliches "Overhead-Processing" ATM-Kommunikationseinrichtungen an die Master-Steuereinheit bzw. Slave-Steuereinheit angeschlossen werden.

Im folgenden wird die Erfindung anhand eines Blockschaltbildes näher erläutert.

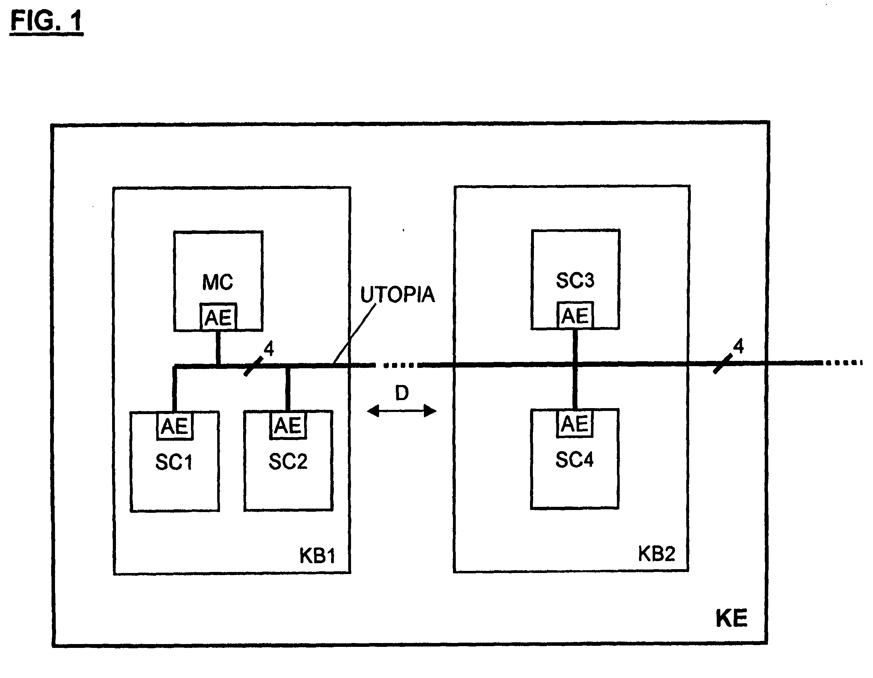

In **Figur 1** ist in einem Blockschaltbild eine Kommunikationseinrichtung KE dargestellt. Die Kommunikationseinrichtung KE weist beispielsweise eine erste und zweite Kommunikations-Baugruppe KB1,KB2 zur Weiterverarbeitung bzw. Übertragung von Daten D auf. Desweiteren sind auf der ersten Kommunikations-Baugruppe KB1 eine Master-Steuereinheit bzw. ein Master-Controller MC sowie eine erste und zweite Slave-Steuereinheit bzw. ein erster und zweiter Slave-Controller SC1,SC2 angeordnet, die über einen das UTOPIA-Transportprotokoll realisierenden Utopia-Systembus UTOPIA verbunden sind. Der Utopia-Systembus UTOPIA ist ein fullduplexfähiger, 8/16 oder 32 Bit breiter Parallelbus und weist gemäß dem UTOPIA-Standard vier Schnittstellengruppen 4 auf, deren Funktionszuordnung in der Druckschrift ATM Forum UTOPIA Level 2, Version 1, Juni 1995 definiert ist. Hierbei kann beispielsweise eine der vier Schnittstellengruppen 4 eine Vielzahl von physikalischen Anschlußleitungen aufweisen.

Die erste und zweite Kommunikations-Baugruppe KB1,KB2 sind über den das UTOPIA-Transportprotokoll realisierenden Utopia-Systembus UTOPIA verbunden, wobei in **Figur 1** nur beispielhaft zwei einer Vielzahl von möglichen Kommunikations-Baugruppen KB1,KB2 dargestellt sind. Des weiteren weist die zweite Kommunikations-Baugruppe KB2 eine dritte und vierte Slave-Steuereinheit bzw. einen dritten und vierten Slave-Controller SC3,SC4 auf, die ebenfalls erfindungsgemäß an den Utopia-Systembus UTOPIA angeschlossen sind.

Der Master-Controller MC und der erste bis vierte Slave-Controller SC1 bis SC4 weisen jeweils eine Anpassungseinrichtung AE auf, mit deren Hilfe die zu übertragenden Daten D an das für das UTOPIA-Transportprotokoll benötigte ATM-Zellenformat angepaßt werden. Bei der Datenkommunikation zwischen dem Master-Controller MC und beispielsweise dem dritten Slave-Controller SC3 werden die Daten D im Master-Controller MC zunächst mit Hilfe der Anpassungseinrichtung AE in das ATM-Zellenformat umgewandelt, d.h. in ATM-Zellen "verpackt" und vom Datentyp abhängige Information in den ATM-Zellheader angefügt. Anschließend werden die derartig angepaßten Daten D über den Utopia-Systembus UTOPIA an den dritten Slave-Controller nach Maßgabe des UTOPIA-Transportprotokolls übermittelt. Hierzu werden durch den Master-Controller MC autark und zyklisch die Slave-Controller SC1 bis SC4 gepollt und abwechselnd an bzw. von dem ersten bis vierten Slave-Controller SC1 bis SC4 Daten D übertragen bzw. angefordert. Hierbei wird jedem Slave-Controller SC1 bis SC4 eine Mindestübertragungsrate zugeordnet, die bei geringerer Auslastung der Kommunikationseinrichtung KE dadurch erhöht wird, daß beispielsweise nur beim zweiten und dritten Slave-Controller SC2,SC3 Daten D zur Übertragung an den Master-Controller MC vorliegen und diese somit nahezu doppelt so oft Daten D zum Master-Controller MC übertragen können. Durch die Verwendung des UTOPIA-Transportprotokolls wird die Bereitstellung von auf Spitzenlast ausgelegter Übertragungskapazität nahezu hinfällig. Somit kann durch die Bereitstellung von geringerer Übertragungskapazität nahezu dieselbe Ubertragungsleistung realisiert werden, da die vorhandene Übertragungskapazität aufgrund der Eigenschaften des Utopia-Systembusses UTOPIA äußerst flexibel an die jeweiligen Datenübertragungsanforderungen des jeweiligen Slave-Controllers SC1 bis SC4 angepaßt werden kann.

Zusätzlich können an die Kommunikationseinrichtung KE beispielsweise weitere Komunikationseinrichtungen KE und somit an den Utopia-Systembus UTOPIA angeschlossen werden - in Figur 1 nicht dargestellt.

Die Anwendung des erfindungsgemäßen Verfahrens ist nicht auf eine Kommunikationseinrichtung KE beschränkt, sondern kann durchaus für die Realisierung von geeigneten Datenkommunikationsaufgaben innerhalb eines Kommunikationsnetzes bzw. einer Informationsverarbeitungsanlage eingesetzt werden.

## Patentansprüche

1. Verfahren zur Datenkommunikation über eine Master-Steuereinheit (MC) und mindestens eine Slave-Steuereinheit (SC1,...,SC4), die über mehrere Anschlussleitungen (4) mit der Master-Steuereinheit (MC) verbunden ist, wobei die Datenkommunikation zwischen der Master-Steuereinheit (MC) und der mindestens einen Slave-Steuereinheit (SC1, ..., SC4) mit Hilfe des standardisierten UTOPIA-Transportprotokolls (UTOPIA) durchgeführt wird,
**dadurch gekennzeichnet,**
**dass** jeweils in der Master-Steuereinheit (MC) und in der mindestens einen Slave-Steuereinheit (SC1, ..., SC4) mit Hilfe einer Anpassungseinrichtung (AE) die zu übertragenden Daten (D) an das ATM-Zellenformat angepasst werden, und die ATM-Zellen gemäß dem UTOPIA-Transportprotokoll zwischen den Steuereinheiten (MC, SC1, ..., SC4) übermittelt werden.

2. Anordnung zur Datenkommunikation über eine Master-Steuereinheit (MC) und mindestens eine Slave-Steuereinheit (SC1,...,SC4), die über mehrere Anschlussleitungen (4) mit der Master-Steuereinheit (MC) verbunden ist, wobei Mittel vorgesehen sind, die die Datenkommunikation zwischen der Master-Steuereinheit (MC) und der mindestens einen Slave-Steuereinheit (SC1, ..., SC4) mit Hilfe des standardisierten UTOPIA-Transportprotokolls (UTOPIA) durchführen,
**dadurch gekennzeichnet,**
**dass** in der Master-Steuereinheit (MC) und in der mindestens einen Slave-Steuereinheit (SC1, ..., SC4) jeweils eine Anpassungseinrichtung (AE) vorgesehen sind, die die zu übertragenden Daten (D) an das ATM-Zellenformat anpassen, wobei die ATM-Zellen gemäß dem UTOPIA-Transportprotokoll zwischen den Steuereinheiten (MC, SC1, ..., SC4) übermittelt werden.

3. Anordnung nach Anspruch 2,
**dadurch gekennzeichnet,**
**dass** die Master-Steuereinheit (MC) und die mindestens eine Slave-Steuereinheit (SC1,..., SC4) auf zumindest einer Kommunikationsbaugruppe (KB1, KB2) angeordnet sind.

## Claims

1. Method for data communication via a master control unit (MC) and at least one slave control unit (SC1,...,SC4), which is connected to the master control unit (MC) via several connection lines (4), with the data communication between the master control unit (MC) and the at least one slave control unit (SC1,..., SC4) being implemented with the aid of the standardised UTOPIA transport protocol (UTOPIA), **characterised in that**
in each instance in the master control unit (MC) and in the at least one slave control unit (SC1,...,SC4), the data to be transmitted is adapted to the ATM cell format with the aid of an adaptation device (AE), and the ATM cells are transmitted between the control units (MC, SC1, ...,SC4) according to the UTOPIA transport protocol.

2. Arrangement for data communication via a master control unit (MC) and at least one slave control unit (SC1,...,SC4), which is connected to the master control unit (MC) via several connection lines (4), with means being provided to implement the data communication between the master control unit (MC) and the at least one slave control unit (SC1,...,SC4) with the aid of the standardised UTOPIA transport protocol,
**characterised in that**
in the master control unit (MC) and in the at least one slave control unit (SC1,...,SC4) an adaptation device (AE) is provided in each instance, which adapts the data (D) to be transmitted to the ATM cell format, with the ATM cells being transmitted between the control units (MC, SC1, ...,SC4) according to the UTOPIA transport protocol.

3. Arrangement according to claim 2
**characterised in that**
the master control unit (MC) and the at least one slave control unit (SC1,...,SC4) are arranged on at least one communication module (LB1, KB2).

## Revendications

1. Procédé pour la communication de données au moyen d'une unité de commande maître (MC) et d'au moins une unité de commande esclave (SC1, ..., SC4) qui est reliée au moyen de plusieurs lignes de raccordement (4) à l'unité de commande maître (MC), la communication de données entre l'unité de commande maître (MC) et l'au moins une unité de commande esclave (SC1, ..., SC4) étant effectuée à l'aide du protocole de transport de UTOPIA (UTOPIA) standardisé,
**caractérisé en ce que**
les données à transmettre (D) sont adaptées au format de cellule ATM respectivement dans l'unité de commande maître (MC) et dans l'au moins une unité de commande esclave (SC1, ..., SC4) à l'aide d'un dispositif d'adaptation (AE), et les cellules ATM sont transmises selon le protocole de transport de UTOPIA entre les unités de commande (MC, SC1, ..., SC4).

2. Agencement pour la communication de données au moyen d'une unité de commande maître (MC) et d'au moins une unité de commande esclave (SC1, ..., SC4), qui est reliée au moyen de plusieurs lignes de raccordement (4) à l'unité de commande maître (MC), des moyens étant prévus, lesquels effectuent la communication de données entre l'unité de commande maître (MC) et l'au moins une unité de commande esclave (SC1, ..., SC4) à l'aide du protocole de transport de UTOPIA (UTOPIA) standardisé,
**caractérisé en ce que**
dans l'unité de commande maître (MC) et dans l'au moins une unité de commande esclave (SC1, ..., SC4) est prévu respectivement un dispositif d'adaptation (AE), lesquels dispositifs adaptent les données à transmettre (D) au format de cellule (ATM), les cellules ATM étant transmises selon le protocole de transport UTOPIA entre les unités de commande (MC, SC1, ..., SC4).

3. Agencement selon la revendication 2,
**caractérisé en ce que**
l'unité de commande maître (MC) et l'au moins une unité de commande esclave (SC1, ..., SC4) sont disposées sur au moins un ensemble de communication (KB1, KB2).
